Europäisches Patentamt

European Patent Office

Office européen des brevets

(11) Publication number: **0 048 234**
**B1**

(12) **EUROPEAN PATENT SPECIFICATION**

(45) Date of publication of patent specification: **10.12.86**

(21) Application number: **81850157.9**

(22) Date of filing: **11.09.81**

(51) Int. Cl.⁴: **F 28 F 27/00,** G 05 D 23/19,
F 24 J 3/00

(54) A method of controlling a heat exchanger.

(30) Priority: **12.09.80 SE 8006391**

(43) Date of publication of application:
**24.03.82 Bulletin 82/12**

(45) Publication of the grant of the patent:
**10.12.86 Bulletin 86/50**

(84) Designated Contracting States:
**FR GB IT SE**

(56) References cited:
**GB-A-1 092 339**

(73) Proprietor: **Weitman, Jacob
Tryffelstigen 8
S-611 63 Nyköping (SE)**

(72) Inventor: **Weitman, Jacob
Tryffelstigen 8
S-611 63 Nyköping (SE)**

(74) Representative: **Wiedemann, Bernd
AB Dahls Patentbyra P.O. Box 19519
S-104 32 Stockholm (SE)**

Courier Press, Leamington Spa, England.

## Description

The present invention relates to a method of controlling the flows of fluids through a heat exchanger, to maintain the efficiency of the heat exchanger at a predetermined value, selected with respect to the prevailing operational conditions, this method eliminating the necessity of measuring anyone of the flows even if the flow of one of the fluid varies with time. The invention, is, as well, in respect of device for executing the method.

In a great number of industrial processes, large flows of fluid of elevated temperature, such as heated waste water, appear, the flow of said fluid possibly being exposed to large variations in time. In case the temperature level of the fluid being rather high, it may be attractive to recover as much as possible of the heat content of the fluid by conducting it through a heat exchanger, preferably a counter current heat exchanger, and there transfer the heat to other fluid making it possible to utilize the heat thus absorbed. However, should the flow of one of said fluids vary, the flow of the other fluid has to be adapted thereto for keeping, within a wide range of operation, the heat exchange in the heat exchanger at or near to an optimal value with respect to prevailing operational conditions.

The solution to this problem which seems nearest at hand and is commonly used implies a direct fluid measurement and controlling the flow of one of the fluids in dependence of the flow of the second fluid and further measured parameters. However, the direct measuring of flow implies technical as well as economical problems in respect of the magnitudes of flows which may be present in for instance, a heat exchanger for recovering heat from waste water in an industrial plant. It is an object of the present invention to substantially eliminate the problems mentioned above by presenting a method of controlling the fluid flow through a heat exchanger in such a manner that the operation of the heat exchanger is maintained substantially at an optimal level even with variations in the flow of one of the fluids, the controlling of the flow of the second fluid being provided for without the use of direct flow measurement.

According to the invention this object is achieved by making use of a method having characteristics as appearing from the appended claims, which are as well in respect of a device for executing the method.

According to GB—A—1 092 339 it belongs to prior art in a process for controlling fluid flows in a heat exchanger to control the outlet temperature of a fluid which is treated by transfer of heat from another fluid by controlling the rate of flow of other fluid in dependence of a difference between said outlet temperature and the inlet temperature of the heating fluid so as to maintain this difference at a predetermined reference value. In an embodiment of this prior art process said temperature difference reference value is automatically adjusted in dependence of a "trend signal" obtained by a comparison between the momentary heat content changes of the two fluids, obtained by measuring and multiplying the flow and the temperature change of each fluid. Thus, also in this prior art case a temperature difference between the inlet and outlet temperatures of the respective fluids is being utilized as a parameter of measurement, although, as will appear later on in the description, for an entirely different purpose. In the process described in GB—A—1 092 339, the differences between inlet and outlet temperatures of one and the same fluid are utilized in combination with said flow measurements of the respective fluids, to determine a desired reference value for the difference between the inlet temperature of the heat donating fluid and the outlet temperature of the heat receiving fluid, this to obtain a desired stability of operation of certain installations. In the case of this present invention, however, the same temperature differences are, in a different way, utilized to obtain an optimal heat recovery control without a necessity of measuring fluid flows by exclusively using temperature measurements for creating a control signal to a valve in either one of the flows for obtaining an optimal quantity of recovered heat.

In the following, the invention will be more closely described with reference to accompanying drawing, in which:

Fig. 1 schematically shows a heat exchanger with pertaining fluid flow parameters,

Fig. 2 is a diagram illustrating the relation between the temperature and enthalphy levels of the fluids flowing through the heat exchanger, and

Fig. 3 schematically illustrates an application of the method according to the invention.

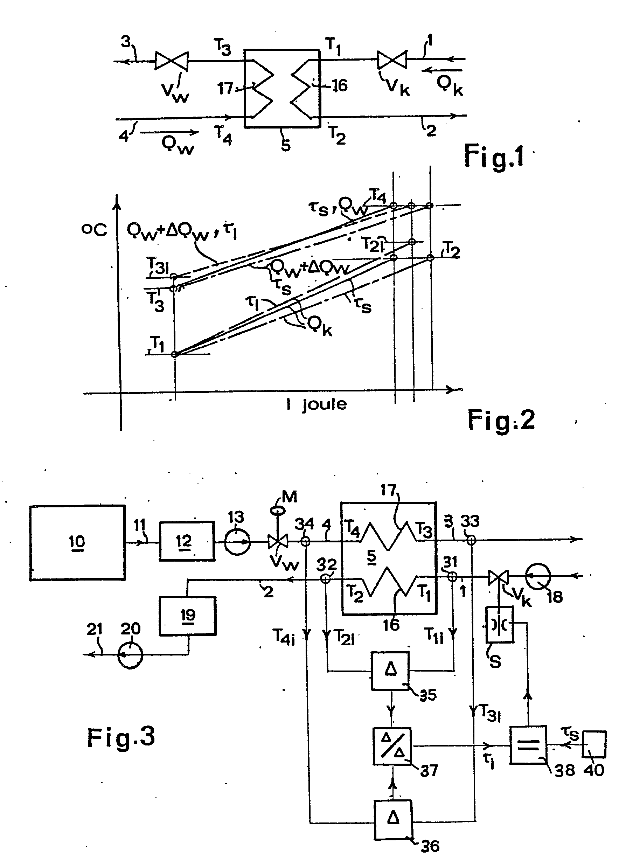

Fig. 1 shows a heat exchanger 5, which may, for instance, be a heat exchanger for recovering heat from large flows of water at elevated temperature, often waste water, and transfer of such heat to a second flow of water. The heat exchanger has an inlet 1 for "cold" water to be heated and flowing with a flow $Q_k$ through the heat exchanger to an outlet 2, and an inlet 4 for "warm" water, from which heat is to be transferred to the cold water and which, with a flow $Q_w$, flows to an outlet 3. The temperatures at the connections of the heat exchanger, that is, the inlets and the outlets, are, respectively, at the inlet 4 $T_4$ at the outlet 3 $T_3$, at the inlet 1 $T_1$ and at the outlet 2 $T_2$. As most often preferred, the heat exchanger operates in counter current.

Fig. 2 shows diagrammatically the progress of temperature, °C, and enthalpy, l, in the two flows, the flow $Q_w$ being cooled down from $T_4$ to $T_3$, while the flow $Q_k$ is heated from $T_1$ to $T_2$.

The parameter of interest for the heat exchanger, which, according to the invention, is to be kept at a predetermined wanted value to maintain a substantially optimal utilization of the heat exchanger, is a temperature relation $\tau_s$ which can be written as:

$$\tau_s = \frac{T_4 - T_3}{T_2 - T_1}$$

For deducing this parameter as a basis for the control of one of the flow quantities in dependence of the size of the other flow quantity so that a transfer of heat from the warmer fluid will proceed while maintaining such flow data that the heat exchange within the heat exchanger is maintained substantially optimal for a prevailing purpose, for which the cold fluid is to be used, taking into account the capacity and other properties of the heat exchanger, the following two concepts have been basic. One concept is the "temperature efficiency" of the heat exchanger, defined as:

$$\eta_T = \frac{T_2 - T_1}{T_4 - T_1}$$

and the second concept the "enthalphy efficiency" of the heat exchanger, defined as

$$\eta_e = \frac{T_4 - T_3}{T_4 - T_1}$$

where $T_1$, $T_2$, $T_3$ and $T_4$ are the temperatures as mentioned above. If one considers limiting cases of $\eta_T$ and $\eta_e$ during operation of a particular heat exchanger, starting, for instance, from a specific flow of hot waste water, the heat of which has to be recovered, entering the heat exchanger with the temperature $T_4$, the following will be valid with respect to the cold water entering the exchanger. If the cold water flow $Q_k$ approaches 0, the temperature $T_2$ thereof when leaving the heat exchanger will approach the inlet temperature $T_4$ of the hot waste water, that is, the "temperature efficiency" approaches the value 1. At the same time the exit temperature $T_3$ of the waste approaches its inlet temperature $T_4$, that is, the "enthalpy efficiency" and therewith the recovery of heat approaches 0. If, on the contrary, the cold water flow $Q_k$ approaches values which are "too high" for the situation in question with respect to the properties of the heat exchanger, the temperature $T_2$ as well as the temperature $T_3$ approaches the inlet temperature $T_1$ of the cold water, the $\eta_T \to 0$ and $\eta_e \to 1$, implying that the heat "recovery" approaches the value 1 and, at the same time, the temperature increase of the cold water approaches the value 0°C, implying a maximal increase of entropy.

An optimal utilization of the heat exchanger for a prevailing purpose obviously implies that the temperature efficiency $\eta_T$ as well as the enthalpy efficeincy $\eta_e$ have values deviating from 0. However, these two efficiencies are in such relation to each other that the quotient between them is:

$$\frac{\eta_e}{\eta_T} = \frac{T_4 - T_3}{T_2 - T_1}$$

this expression thus corresponding to a progress of the relation $\eta_e/\eta_T$ which between the extreme values 0 and 1 for $\eta_e$ and, correspondingly, 1 and 0 for $\eta_T$ varies continuously from 0 to infinity, and, consequently, contains the above-mentioned value $\tau_s$, being the parameter which according to what has been said above shall be maintained at a predetermined wanted value for a maximal utilization of the heat exchanger in question for a prevailing demand.

Presuming that in Fig. 2 the continuous lines show a situation, in which the condition for an optimal exchange in the heat exchanger prevails and in which, thus,

$$(T_4 - T_3)/(T_2 - T_1) = \tau_s.$$

The ratio between the flow of the heat donating fluid and the flow of the heat receiving fluid is always, neglecting external losses,

$$Q_k(T_2 - T_1) = Q_w(T_4 - T_3.$$

If now the flow of the heat donating fluid is being increased by operational reasons, the flow of the heat receiving fluid should be increased in a corresponding degree to maintain the predetermined optimal utilization for the purpose in question. With an unaltered flow of the heat receiving fluid and an increase of the flow of the heat donating fluid, the exit temperatures of the two flows would change in accordance with

$$Q_k(T_{2i} - T_{1)} = (Q_w + \Delta Q_w)(T_4 - T_{3i}),$$

in which $\Delta Q_w$ is the change of the flow of the heat donating fluid and $T_{3i}$ and $T_{2i}$, respectively, are the then prevailing exit temperatures. It is true that the heat recovery is then increased, but the temperature change ratio will be deviating from the predetermined one for obtaining an optimal operation in the relation

$$\tau_i/\tau_s = Q_w/(Q_w + \Delta Q_w).$$

In Fig. 2 this sitution is illustrated by the dashed lines between the temperature levels $T_4$ and $T_{3i}$ and the temperature levels $T_1$ and $T_{2i}$, respectively. After a control of the flow of the heat receiving fluid in accordance with the invention, so that the temperature relation $\tau_i$ agrees with the predetermined value $\tau_s$, a situation illustrated by the dashed-and-dotted lines in Fig. 2 will be present with flow quantities corresponding to the relation

$$\tau_s = (Q_w + \Delta Q_w)/(Q_k + \Delta Q_k),$$

$\Delta Q_k$ being the increase of the flow of the heat receiving fluid provided for to reinstall the prescribed parameter in question.

Hence, it is possible to control anyone of the flows in dependence of the other in such a manner that $\tau_s$ is maintained at a constant level, the measured values $T_{1i}$, $T_{2i}$, $T_{3i}$ and $T_{4i}$ of the four temperatures in question are used as primary control signals. Of these primary control signals, the signals representing $T_{3i}$ and $T_{4i}$ are connected to a differentiating unit, generating a signal representing the temperature difference $(T_{4i}-T_{3i})$ and the signals representing $T_{1i}$ and $T_{2i}$ as second differentiating unit generating a signal representing the temperature difference $(T_{2i}-T_{1i})$. Said two signals are applied as input signals to a quotient unit, the output signal of which is representative of the quotient

$$(T_{4i}-T_{3i})/(T_{2i}-T_{1i}),$$

said output signal being applied as an input signal representative of the actual value $\tau_i$ of the present temperature quotient $\tau_s$ for comparison with the predetermined desired temperature quotient in a comparator unit, the output signal of which constituting an actuating error signal for controlling either of the flows, $Q_w$ or $Q_k$, in dependence of the other while maintaining the predetermined parameter of interest for the heat exchanger in question.

It may be emphasized that it is, obviously inessential whether, at a comparison in the comparating unit, the temperature difference quotients $\tau_s$ and $\tau i$ or the reciprocal values thereof are used for the flow control. No knowledge whatsoever of intensities of flow of the two fluids will be necessary to control the flows such that the quotient between them is maintained constant and at a value corresponding to a predetermined optimal utilization of the heat exchanger. An optimal utilization of the heat exchanger to fulfil a prevailing demand may vary from one operational situation to another, which may then be provided for by selectively changing the signal applied to the comparing unit as a predetermined desired value.

Fig. 3 schematically illustrates an embodiment of a plant for using the control method according to the invention. the details of the plant corresponding to details of Fig. 1 have the same reference numerals as in Fig. 1. Thus, 5 is a heat exchanger, in which flows of a hot water source and from a cold water source are to be mutually controlled according to the invention while heat is transferred from the first-mentioned flow to the last-mentioned one. The heat exchanger 5 has an inlet 4 for water which is hot at said inlet and which when flowing through a channel 16 in the heat exchanger to an outlet 3 donates heat to cold water entering the inlet 1 therefor of the heat exchanger, and which after having passed a channel 17 leaves the heat exchanger at an outlet 2 for said water.

In Fig. 3 the block 10 is an industry process equipment from which heated waste water flows out at a varying quantity and/or with varying temperature through a waste water duct 11. For equalization purposes said water flows to a buffer tank 12, which may be desirable or necessary from an economic point of view to equalize heavy variations of the waste water flow or to provide for a possibility to operate the heat exchanger in such a manner that the heat transport from hot waste water to cold fresh water in the heat exchanger can proceed substantially independent of variations in the outflow of waste water from the process equipment of the plant.

From the buffer tank 12 the hot waste water is brought by a pump 13 through a valve $V_w$ and the channel 17 of the heat exchanger to the outlet 3 for the cooled down waste water, to be brought further to waste or purification and possible re-use. In the case as illustrated, the valve $V_w$ is assumed to be controlled after demand, that is, set for a particular constant or quasiconstant waste water flow through the heat exchanger, the flow of the fresh water to be heated in the heat exchanger having to be controlled according to the invention without a necessity for measuring the size of either one of the flows to maintain a desired operating situation.

Fresh water to be heated is admitted to the fresh water channel 16 of the heat exchanger at its inlet 1 and leaves the heat exchanger at its outlet 2, as shown to a buffer tank 19 for heated fresh water, from which it may be conveyed to user by a pump 20 through a duct 21. Obviously, a need for a buffer tank 19 for heated fresh water may not be present in case the demand of the plant for hot fresh water is always above the quantity hot fresh water obtainable from the heat exchanger when controlled according to the invention for optimal operation.

In the embodiment according to Fig. 3, a control valve $V_k$ is arranged in the fresh water duct to control according to the invention the fresh water flow through the heat exchanger.

To control this valve $V_k$, water temperature sensors 31—34 are present in the in- and outlets 1—4 of the channels 16 and 17 of the heat exchanger. Of these temperature sensors, the temperature sensor 31 in the fresh water inlet 1 and the temperature sensor 32 in the fresh water outlet 2 are connected to a differentiating unit 35 for transfer thereto of each one signal representative of the actual output values $T_{2i}$ and $T_{1i}$, respectively, said differentiating unit 35 presenting at its output a signal representative of the difference between said temperatures to a quotient unit 37. Correspondingly, the temperature sensor 33 in the outlet 3 of the waste water and the temperature sensor 34 in the inlet 4 of the waste water are connected to each one input of a differentiating unit 36, the output of which is connected to a second input of the quotient unit 37, the quotient unit 37 at its output presenting a signal representative of the quotient

$$(T_{4i}-T_{3i})/(T_{2i}-T_{1i}),$$

that is, the actual output value $\tau_i$, to one input of a comparing unit 38, a second input of which receives a signal from an adjustable signal generator 40, a signal representative of the desired value $\tau_s$ of the temperature relation in question.

In a manner well known per se in connection with servo controls, the comparator 38 generates an actuating error signal, by differentiating, for instance, to control a servo system S for setting the valve $V_k$, said servo in dependence of a present actuating error signal adjusting the valve position so that the parameter $\tau_s$, which is predetermined with respect to the intended operational conditions of the heat exchanger, is maintained, in the case illustrated by Fig. 3, with a quasistationary waste water flow symbolized with a control wheel M, without a necessity for actually measuring either one of the actual sizes of the flows.

In case the operational conditions are such that it might be more convenient to control the fresh water flow quasistationary or in the dependence of a varying demand, the valve $V_w$ may instead be controlled in analogy with the control of the valve $V_k$ as shown in Fig. 3, to maintain the temperature relation $\tau_s$.

**Claims**

1. A method of controlling the flow intensity of a heat donating fluid ($Q_w$) having an inlet temperature $T_4$ and an outlet temperature $T_3$ or a heat receiving fluid ($Q_k$) having an inlet temperature $T_1$ and an outlet temperature $T_2$ flowing through a heat exchanger (5), for maintaining an optimum operation of the heat exchanger irrespective gf variations in the flow of one of the fluids, the other fluid being controlled, wherein the momentary inlet temperatures $T_{1i}$ and $T_{4i}$, respectively, and outlet temperatures $T_{2i}$ and $T_{3i}$, respectively, of heat receiving fluid and the heat donating fluid are measured, characterized in that a quotient

$$(T_{4i}-T_{3i})/(T_{2i}-T_{1i})$$

is formed and used to control the flow of either one of the fluids as an actual value $\tau_i$ in a comparison with a predetermined desired value $\tau_s$, equivalent to the quotient of the enthalpy efficiency $\eta_e$ and the temperature efficiency $\eta_t$ by controlling a flow control means ($V_k$ or $V_w$) for said either one fluid to a flow intensity at which the actual value $\tau_i$ substantially agrees with the predetermined desired value $\tau_s$.

2. A device for executing the method according to claim 1 to control the flow intensity of a heat donating fluid ($Q_w$) having an inlet temperature $T_4$ and an outlet temperature $T_3$ or a heat receiving fluid ($Q_k$) having an inlet temperature $T_1$ and an outlet temperature $T_2$ flowing through a heat exchanger (5) by means of a valve ($V_k$ or $V_w$) arranged in the flow path of the other fluid and controlled by a servo unit (S), said device comprising temperature sensors (34, 33 and 31 32, respectively) in the inlet (4) and the outlet (3) of the heat donating fluid ($Q_w$) and in the inlet (1) and outlet (2) of the heat receiving fluid ($Q_k$), said temperature sensors being arranged to present sensor signals ($T_{4i}$, $T_{3i}$, $T_{1i}$ and $T_{2i}$, respectively) representative of the fluid temperatures at the respective inlets and outlets, a first differentiating unit (36) for generating signal representative of the difference between the inlet temperature ($T_{4i}$) and outlet temperature ($T_{3i}$) of the heat donating fluid ($Q_w$) and a second differentiating unit (35) for generating a signal representative of the difference between the outlet temperature ($T_{2i}$) and inlet temperature ($T_{1i}$) of the heat receiving fluid ($Q_k$), characterized by further comprising a quotient unit (37) receiving as input sigals the output signals of the two differentiating units (35 and 36) and arranged for generating an output signal ($\tau_i$) representative of the ratio between the signals applied to the quotient unit from said two differentiating units (35, 36), means (40) for generating a signal representative of a predetermined, selected desired value ($\tau_s$) for the ratio between the enthalpy efficiency ($\eta_e$) and temperature efficiency ($\eta_T$) of the heat exchanger, a comparing unit (38) for comparing the output signal ($\tau_i$) of said quotient unit (37) and the output signal ($\tau_s$) of said means (40) generating said desired value ($\tau_s$) and generating an output signal representative of a difference between said signals, said valve servo units(s) being controlled in dependence of the output signal from the comparating unit (38) to set the valve for delivering a flow of the fluid controlled thereby that the actual value ($\tau_i$) substantially agrees with the predetermined desired value ($\tau_s$).

3. A device according to claim 2, characterized by comprising a buffer tank (12) in a duct from a source (10) of the heat donating fluid ($Q_w$) to the heat exchanger, said tank being arranged for collecting heat donating fluid from said source and delivering said fluid to the heat exchanger, making possible a transfer of the fluid from the buffer tank to the heat exchanger with a flow deviating from the flow to the buffer tank from said source.

4. A device according to any one of claims 2 and 3, characterized by comprising a buffer tank (19) arranged in a duct from the outlet (2) of the heat receiving fluid ($Q_k$) from the heat exchanger (5) to a consumer (20, 21), said tank making possible a flow of heat receiving fluid to a consumer deviating from the flow of said fluid from the heat exchanger to the buffer tank.

**Patentansprüche**

1. Verfahren zum Regeln des Flusses eines Wärme abgebenden Fluids ($Q_w$) mit einer Einlaßtemperatur ($T_4$) und einer Auslaßtemperatur ($T_3$) oder eines Wärme aufnehmenden Fluids ($Q_k$) mit einer Einlaßtemperatur ($T_1$) und einer Auslaßtemperatur ($T_2$), die durch einen Wärmetauscher (5) fließen, wobei zum Aufrechterhalten eines optimalen, von Änderungen des Flusses eines der Fluids unabhängigen Arbeitsweise des Wärmetauschers das andere Fluid geregelt wird und dabei die Monentan - Einlaßtemperatur ($T_{1i}$) bzw. ($T_{4i}$) und die Monentan - Auslaßtemperturen ($T_{2i}$) bzw. ($T_{ei}$) des Wärme aufnehmenden und des Wärme abgebenden Fluids gemessen werden, dadurch gekennzeichnet, daß ein Quotient

$$(T_{4i}-T_{3i})/(T_{2i}-T_{1i})$$

gebildet und zum Regeln des Flusses eines der Fluids sowie eines Istwerts ($\tau_i$) im Vergleich mit einem vorgegebenen Sollwert ($\tau_s$) benutzt wird, der dem Quotient aus dem Enthalpie - Wirkungsgrad ($\eta_e$) und dem Temperatur - Wirkungsgrad ($\eta_t$) entspricht, indem durch ein Flußsteuermittel ($V_k$ oder $V_w$) das genannte eine Fluid auf einen Fluß geregelt wird, bei dem der Istwert ($\tau_i$) im wesentlichen mit dem vorgegebenen Sollwert ($\tau_s$) übereinstimmt.

2. Einrichtung zum Ausüben des Verfahrens nach Anspruch 1, um den Fluß eines Wärme abgebenden Fluids ($Q_w$) mit einer Einlaßtemperatur ($T_4$) und einer Auslaßtemperatur ($T_3$) oder eines Wärme aufnehmenden Fluids ($Q_k$) mit einer Einlaßtemperatur ($T_1$) und einer Auslaßtemperatur ($T_2$), die durch einen Wärmetauscher (5) fließen, mittels eines Ventils ($V_k$ oder $V_w$) zu regeln, das im Stromweg der anderen Flüssigkeit angeordnet und durch eine Servoeinheit (S) angesteuert wird, mit im Einlaß (4) und Auslaß (3) des Wärme abgebenden Fluids und im Einlaß (1) und Auslaß (2) des Wärme aufnehmenden Fluids ($Q_k$) angeordneten Temperatursensoren (34, 33 bzw. 31, 32), deren Sensorsignale ($T_{4i}$ bzw. $T_{3i}$ bzw. $T_{1i}$ bzw. $T_{2i}$) die Fluidemperaturen an den entsprechenden Einund Auslässen darstellen, mit einer ersten Subtrahiereinheit (36) zum Bilden eines die Differenz der Einlaßtemperatur ($T_{4i}$) und der Auslaßtemperatur ($T_{3i}$) des Wärme abgebenden Fluids ($Q_w$) darstellenden Signals und einer zweiten Subtrahiereinheit (35) zum Bilden eines die Differenz der Auslaßtemperature ($T_{2i}$) und der Einlaßtemperatur ($T_{1i}$) des Wärme aufnehmenden Fluids ($Q_k$) darstellenden Signals, gekennzeichnet daurch eine Dividiereinheit (37), die als Eingangssignale die Ausgangssignale der beiden Subtrahiereinheiten (35 und 36) empfängt und ein das Verhältnis zwischen den von den beiden Substrahiereinheiten (35, 36) an die Dividiereinheit angelegten Signalen darstellendes Ausgangssignal ($\tau_i$) erzeugt, Mittel (40) zum Bilden eines einen vorgegebenen, ausgewählten sollwert ($\tau_s$) des Verhältnisses zwischen dem Enthalpie - Wirkungsgrad ($\eta_e$) und dem Temperatur - Wirkungsgrad ($\eta_T$) des Wärmetauschers darstellenden Signals, eine Vergleichseinheit (38) zum Vergleichen des Ausgangssignals ($\tau_i$) der Dividiereinheit (37) mit dem Ausgangssignal ($\tau_s$) der den Sollwert ($\tau_s$) erzeugenden Mittel (40) und zum Bilden eines die Differenz der Signale darstellenden Ausgangssignals, wobei die Ventil - Servoeinheit (S) in Abhängigkeit vom Ausgangssignal der Vergleichseinheit (38) gesteuert wird, um das den Fluß des Fluids steuernde Ventil derart einzustellen, daß der Istwert ($\tau_i$) im wesentlichen mit dem vorgegebenen Sollwert ($\tau_s$) übereinstimmt.

3. Einrichtung nach Anspruch 2, gekennzeichnet durch einen in einer Leitung von der Quelle (10) des Wärme abgebenden Fluids ($Q_w$) zu dem Wärmetauscher angeordneten Puffertank (12), der zur Aufnahme des Wärme abgebenden Fluids von der Quelle und zur Abgabe des Fluids zu dem Wärmetauscher ausgebildet ist, wodurch ein Transport des Fluids von dem Puffertank zu dem Wärmetauscher mit einem von dem Fluß von der Quelle zu dem Puffertank abweichenden Fluß ermöglicht wird.

4. Einrich-tung nach Anspruch 2 oder 3, gekennzeichnet durch einen in einer Leitung von dem Auslaß (2) des Wärme aufnehmenden Fluids ($Q_k$) aus dem Wärmetauscher (5) zu einem Verbraucher (20, 21) angeordneten Puffertank (19), wobei der Tank einen von dem Fluß des Wärme aufnehmenden Fluids von dem Wärmetauscher zu dem Puffertank abweichenden Fluß des Fluids zu einem Verbraucher ermöglicht.

**Revendications**

1. Procédé pour commander l'importance du débit d'un fluide donneur de chaleur ($Q_w$) ayant une température d'entrée ($T_4$) et une température de sortie ($T_3$) ou d'un fluide récepteur de chaleur ($Q_k$) ayant une température d'entrée ($T_1$) et une température de sortie ($T_2$) s'écoulant à travers un échangeur thermique(s), pour maintenir un fonctionnement optimal de l'échangeur thermique indépendamment des variations de l'écoulement de l'un des fluides, l'autre fluide étant commandé, dans lequel les températures instantanées d'entrée ($T_1$) et ($T_4$) respectivement, et les températures instantanées de sortie ($T_{2i}$ et $T_{3i}$) respectivement, du · fluide récepteur de chaleur et du fluide donneur de chaleur sont measurées, caractérisee en ce qu'un quotient

$$((T_{4i}-T_{3i})/(T_{2i}-T_{1i}))$$

est formé et utilisé pour commander le débit de l'un ou l'autre des fluides en tant que valeur réelle ($\tau_i$) dans une comparaison avec une valeur désirée prédéterminée ($\tau_s$), équivalent au quoteint du rendement d'enthalpie ($\eta_e$) et du rendement de température ($\eta_t$) en commandant un dispositif de réglage d'écoulement ($V_k$ ou $V_w$) pour l'un ou l'autre des fluides à une valeur pour laquelle la valeur réelle ($\tau_i$) concorde notablement avec la valeur désirée prédéterminée ($\tau_s$).

2. Dispositif pour la mise en oeuvre du procédé défini suivant la revendication 1, pour commander l'importance du debit d'un fluide donneur de chaleur ($Q_w$) ayant une température d'entrée ($T_4$) et une température de sortie ($T_3$) ou d'un fluide récepteur de chaleur ($Q_k$) ayant une température d'entrée ($T_1$) et une température de sortie ($T_2$) s'écoulant à tragers l'échangeur thermique (5) au moyen d'une vanne ($V_k$ ou $V_w$) disposée dans le trajet d'écoulement de l'autre fluide et commandée par un ensemble asservi (S), ledit dispositif comprenant des capteurs de température (34, 33 et 31, 32) respectivement dans l'entrée (4) et la sortie (3) du fluide donneur de chaleur ($Q_w$) et dans l'entrée (1) et la sortie (2) du fluide récepteur de chaleur ($Q_k$), lesdits capteurs de température étant agencés pour établir des signaux d'erreurs ($T_{4i}$, $T_{3i}$ et $T_{1i}$ et $T_{2i}$) respectivement représentatifs des températures du fluide aux entrées et sorties respectives, un premier ensemble différentiateur (36) pour engendrer un signal représentatif de la différence entre la température d'entrée ($T_{4i}$) et la température de sortie ($T_{3i}$) du fluide donneur de chaleur ($Q_w$) et un second ensemble différentiateur (35) pour engendrer un signal représentatif de la différence entre la température de sortie ($T_{2i}$) et la température d'entrée ($T_{1i}$) du fluide récepteur de chaleur ($Q_k$), caractérisé en ce qu'il comprend en outre un ensemble diviseur (37) recevant en tant que signaux d'entrée les signaux de sortie des deux ensembles différentiateurs (35 et 36) et agencé pour engendrer un signal de sortie ($\tau_i$) représentatif du rapport entre les signaux appliqués à l'ensemble diviseur en provenance desdits ensembles différentiateurs (35, 36), des moyens (40) pour engendrer un signal représentatif d'une valeur désirée choisie prédéterminée ($\tau_s$) pour le rapport entre le rendement d'enthalpie ($\eta_e$) et le rendement de température ($\eta_T$) de l'échangeur thermique, un ensemble comparateur (38) pour comparer le signal d'entrée ($\tau_i$) dudit ensemble diviseur (37) et le signal de sortie ($\tau_s$) des moyens (40) engendrant ladite valeur désirée ($\tau_s$ et engendrant un signal de sortie représentatif d'une différence entre lesdits signaux, ledit ensemble de vanne asservie (S) étant commandé en fonction du signal de sortie provenant de l'ensemble comparateur (38) pour régler la vanne pour distribuer un courant de fluide commandé grâce à quoi la valeur réelle ($\tau_i$) concorde notablement avec la valeur désirée prédéterminée ($\tau_s$).

3. Dispositif suivant la revendication 2, caractérisé en ce qu'il comprend un réservoir-tampon (12) sur un conduit provenant d'une source (10) de fluide donneur de chaleur ($Q_w$) à l'échangeur thermique, ledit réservoir étant agencé pour recueillir de fluide donneur de chaleur provenant de ladite source et distribuer ledit fluide à l'échangeur thermique, permettant un transfert de fluide du réservoir-tampon à l'échangeur thermique avec un débit s'écartant du débit vers le réservoir-tampon en provenance de ladite source.

4. Dispositif suivant l'une quelconque des revendications 2 et 3, caractérisé en ce qu'il comprend un réservoir-tampon (19) disposé sur un conduit provenant de la sortie (2) du fluide récepteur de chaleur ($Q_k$) provenant de l'échangeur thermique (5) vers un utilisateur (20, 21) ledit réservoir permettant un écoulement de fluide récepteur de chaleur vers un utilisateur, s'écartant du débit dudit fluide provenant de l'échangeur thermique vers le réservoir-tampon.

**Fig.1**

**Fig.2**

**Fig.3**